# EUROPÄISCHE PATENTSCHRIFT

(11) **EP 2 548 691 B1**
(45) Veröffentlichungstag und Bekanntmachung des Hinweises auf die Patenterteilung: **31.08.2016**
(21) Anmeldenummer: 11174965.1
(22) Anmeldetag: 22.07.2011
(51) Int. Cl.: B23K 26/08, B23K 26/38, B23K 37/00, B23K 37/04, B23Q 1/76

(54) **Entladevorrichtung für eine Bearbeitungsvorrichtung zur Bearbeitung von Rohren mit einer in Höhenrichtung beweglichen Ablagefläche ; Verfahren zur schneidenden Bearbeitung eines Rohres mit einer solchen Vorrichtung**
Discharging device for a processing device for processing tubes with a deposit surface movable in the height direction ; Method of cut processing a tube using such device
Dispositif de déchargement pour un dispositif d'usinage de tuyaux avec une surface de depôt déplaçables en hauteur ; Méthode d'usinage par découpe utilisant un tel dispositif

(43) Veröffentlichungstag der Anmeldung: 23.01.2013
(73) Patentinhaber: TRUMPF Werkzeugmaschinen GmbH + Co. KG, 71254 Ditzingen (DE)
(72) Erfinder: Schopf, Ralf, 71254 Ditzingen (DE); Jarsch, Florian, 71254 Ditzingen (DE)
(74) Vertreter: Kohler Schmid Möbus Patentanwälte

(56) Entgegenhaltungen:
- EP-B1- 1 923 166
- DE-U1- 20 310 828
- FR-A1- 2 786 717
- JP-A- 5 008 065
- JP-A- 62 173 129

## Beschreibung

Die vorliegend Erfindung betrifft eine Entladevorrichtung für eine Bearbeitungsvorrichtung zur Bearbeitung von Rohren, die eine in Rohrlängsrichtung (X-Richtung) bewegbare und in das Innere eines zu bearbeitenden Rohres einführbare Fanglanze aufweist, siehe, z.B., EP 1 923 166 B1, sowie ein Bearbeitungsverfahren unter Einsatz einer solchen Entladevorrichtung.

Unter einem Rohr wird im Rahmen dieser Anmeldung ein länglicher Körper (ein längliches Werkstück) verstanden, dessen Länge in der Regel wesentlich größer als serin querschnitt ist und der aus einem im Wesentlichen unflexiblen Material gefertigt ist. Rohre können eine beliebige offene oder geschlossene Querschnittsform aufweisen, wobei Rund- und Rechteckrohre die gebräuchlichsten Rohre darstellen. Rohrförmige Bauteile, die aus Rohren durch Laserschneiden hergestellt werden, werden im Rahmen dieser Anmeldung als Rohrtelle bezeichnet.

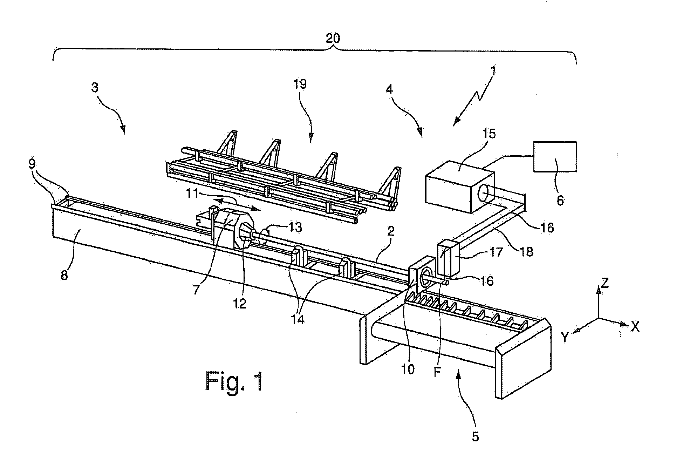

**Fig. 1** zeigt eine als "TruLaser Tube" bekannte Bearbeitungsanlage **1** zum Laserschneiden von Rohren **2,** die als Laserschneidanlage bezeichnet wird und zur Bearbeitung von Rohren mit einer beliebigen Querschnittsform ausgebildet ist. Die gezeigte Laserschneidanlage 1 umfasst eine Zuführvorrichtung **3** zur seitlichen Zufuhr eines zu schneidenden Rohrs 2 zu der Laserschneidanlage 1, eine Bearbeitungsvorrichtung **4** zum Laserschneiden von Rohrteilen aus dem Rohr 2 und eine Entladevorrichtung **5** zum Entladen der geschnittenen Rohrteile aus der Laserschneidanlage 1. Alle wesentlichen Funktionen der Laserschneidanlage 1 werden mittels einer numerischen Steuerungsvorrichtung **6** gesteuert.

Die Zuführvorrichtung 3 umfasst eine als Werkstück-Bewegungseinrichtung dienende Dreh- und Vorschubeinrichtung **7** sowie ein Maschinenbett **8** mit Führungsschienen **9** und eine Durchschiebeeinrichtung **10.** Die Dreh- und Vorschubeinrichtung 7 ist motorisch angetrieben in Vorschubrichtung **11** auf den Führungsschienen 9 verfahrbar. An der einem zuzuführenden Rohr 2 zugewandten Seite weist die Drehund Vorschubeinrichturtg **7** eine Spanneinrichtung **12** auf, die in Richtung des Doppelpfeils **13** gesteuert drehbar ist und das zugeführte Rohr 2 von außen umfasst und ortsfest klemmt. Das zugeführte Rohr 2 wird von mindestens einer in das Maschinenbett 8 integrierten Werkstückabstützung **14** abgestützt. Im Bereich der Bearbeitungsvorrichtung 4 wird das Rohr 2 durch die Durchschiebeeinrichtüng 10 geführt. Die Durchschiebeeinrichtung 10 ist so ausgelegt, dass das eingespannte Rohr 2 in Vorschubrichtung 11 geführt und nicht ortsfest geklemmt ist. Das Rohr 2 ist in der Durchschiebeeinrichtung 10 um die Drehachse 13 drehbar.

Die Bearbeitungsvorrichtung 4 umfasst eine Laserstrahlquelle **15** zum Erzeugen eines Laserstrahls **16,** einen Bearbeitungskopf **17** und eine Strahlführung **18,** die den Laserstrahl 16 von der Laserstrahlquelle 15 zum Bearbeitungskopf 17 führt. Der Laserstrahl 16 tritt aus dem Bearbeiturigskopf 17 aus und wird an einer Bearbeitungsstelle **F** auf die Außenumfangsfläche des eingespannten Rohrs 2 fokussiert. Auf der dem Maschinenbett 8 abgewandten Seite der Durchschiebeeinrichtung 10 ist die Entladevorrichtung 5 vorgesehen, die die aus dem Rohr 2 geschnittenen Rohrteile sowie das Restrohr aus der Laserschneidanlage 1 abführt.

Um die Produktivität der Laserschneidanlage 1 zu erhöhen, weist die in Fig. 1 gezeigte Laserschneidanlage 1 ein Beradevorrichtung **19** als Äutomatisierungskomponente auf, mit.der ein Rohr 2 automatisch in eine Übergabeposition befördert und an die Zuführvorrichtung 3 der Laserschneidanlage 1 übergeben wird. Die maschinelle Anordnung aus Laserschneidanlage 1 und der Beladevorrichtung 19 wird als Fertigungszelle **20** bezeichnet.

Wenn das über die Beladevorrichtung 19 zugeführte Rohr 2 in der Übergabeposition angeordnet ist, befindet sich die Dreh- und Vorschubeinrichtung 7 zunächst: in einer bearbeitungskopffernen Ausgangsstellung, Zur Rohrbearbeitung verfährt die Drehund Vorschubeinrichtung 7 aus ihrer Position mit geöffneter Spanneinrichtung 12 so weit in Richtung auf das zugeführte Rohr 2 zu, bis das dem Bearbeitungskopf 17 abgewandte Ende des Rohrs 2 innerhalb der Spanneinrichtung 12 zu liegen kommt. Die Spanneinrichtung 12 wird geschlossen und dadurch das Rohr 2 an der Dreh- und Vorschubeinrichtung 7 ortsfest geklemmt. Die Dreh- und Vorschubeinrichtung 7 und das Rohr 2 bewegen sich gemeinsam in Richtung auf den Bearbeitungsköpf 17. Dabei läuft das Rohr 2 mit seinem dem Bearbeitungskopf 17 zugewandten Ende zunächst in die Durchschiebeeinrichtung 10 ein und wird in Vorschubrichtung 11 durch die Durchschiebeeinrichtung 10 hindurch bewegt, wobei das Rohr 2 in der Durchschiebeeinrichtung 10 um die Drehachse 13 drehbar ist. Das Rohr 2 wird durch die Verfahrbewegung der Dreh- und Vorschubeinrichtung 7 in Vorschubrichtung 11 gegenüber dem Bearbeitungskopf 17 in die gewünschte Bearbeitungsposition zugestellt.

Aus der EP1 923 166 B1 ist eine solche Bearbeituhgsanlage zum Laserschneiden von Rohren bekannt, die an der Entiadevorrichtung eine Fanglanze und einen Abstreifer aufweist, um Rohre spritzerfrei bearbeiten zu können. Die Fanglanze. kann in das Innere des zu bearbeitenden Rohres eingeführt werden. Fertig geschnittene Rohrteile werden auf der Fanglanze abgelegt und können nach der Bearbeitung des Rohrs durch den Abstreifer von der Fanglanze abgestreift und entladen werden. Die Fangtanze und der Abstreifer sind in Rohrlängsrichtung bewegbar.

Aus der DE 102 49 106 A1 ist es bekannt, in einer Rohrschneidmaschine einen gesteuert verfahrbaren Wagen anzuordnen, der verschiedene Hilfseinrichtungen (z.B. eine Hohllanze) tragen kann, um die zu bearbeitenden oder die fertig bearbeiteten Rohre zu stützen, zu führen oder auszuwerfen. Der Wagen weist eine horizontale Trägerplatte zur Lagerung der Hilfseinrichtung auf, welche durch Servoantriebe in vertikaler Richtung gesteuert verschiebbar ist,

### Aufgabe der Erfindung

Es ist die Aufgabe der vorliegenden Erfindung, eine Entladevorrichtung mit Fanglanze für eine Rohrbearbeitungsmaschine stabiler und robuster zu gestalten, die Lebensdauer einer Fanglanze zu erhöhen und insbesondere Kratzer auf der Innenweite des zu bearbeitenden Rohres zu vermeiden.

### Gegenstand der Erfindung

Eine Entladevorrichtung gemäß der Erfindung ist in Anspruch 1 definiert.

Das höhenverstellbare Stützelement für die Fanglanze ist Bestandteil der Entladevorrichtung, ist also auf der der Dreh- und Vorschubeinrichtung abgewandten Seite der Bearbeitungsposition angeordnet. Bei einer solchen Entladevorrichtung kann das Stützelement in der Höhe an die Fanglanze angestellt und somit als Stützstelle für die Fanglanze (engl. "Catcher") eingesetzt werden. Dies verhindert eine Durchbiegung der Lanze aufgrund ihres. Eigengewichts oder aufgrund des Gewichts von aufgefädelten Rohrabschnitten und führt so zu einer verbesserten Steifigkeit der Anordnung, zur Verringerung von Vibrationen und zur Erhöhung der Lebensdauer der Fanglanze. Auf diese Weise wird auch eine bessere Genauigkeit in der Bearbeitung erreicht und die Entstehung von Kratzern auf der Rohrinnenseite durch Kontakt zwischen Lanze und Rohr kann vermieden werden.

Um zu verhindern, dass es beim Fallen von geschnittenen Rohrabschnitten auf die Fanglanze zu einer Durchbiegurig der Fanglanze und zu Beschädigungen an der Fanglanze kommt, kann eine Ablagefläche zur Lagerung des Rohrs bzw. von bei der schneidenden Bearbeitung vom Rohr zu trennenden Rohrabschnitten verwendet werden. Die Ablagefläche wird zu diesem Zweck im Bereich der Bearbeitungsstelle angeordnet und unterstützt während der Bearbeitung mindestens einen abzutrennenden Rohrabschnitt. In diesem Fall ist es nicht notwendig, die abgetrennten Rohrabschnitte mit der Fanglanze aufzufangen. Die Rohrabschnitte können stattdessen auch nach der schneidenden Bearbeitung auf der Ablagefläche gelagert werden.

So ist es seinerseits möglich, dass die Fanglanze mittig im Rohr und in den Rohrabschnitten angeordnet bleibt und es nicht zu einer Berührung der Rohrinnenwand mit der Fanglanze kommt. Andererseits können die Rohrabschnitte durch eine gesteuerte (langsame) Absenkbewegung der Ablagefläche auf der Fanglanze abgelegt werden, anstatt durch Schwerkraftwirkung ungesteuert auf die Lanze zu fallen. Auf diese Weise werden Kratzer auf der Rohrinnenseite sowie Beschädigungen der Fanglänze vermieden. In einer besonders vorteilhaften Variante der erfindungsgemäßen Entladevorrichtung werden beide vorgenannten Maßnahmen kombiniert.

In einer vorteilhaften Ausführungsform umfasst ein bevorzugt in Rohrlängsrichtung bewegbarer Abstreifer das Stützelement, das insbesondere in Form einer Stützrolle ausgebildet ist. Zur Unterstützung der Fanglanze kann das Stützelement an dem Abstreifer in Höhenrichtung bewegbar gelagert sein. Günstig ist es, wenn der Abstreifer selbst in Höhenrichtung bewegbar gelagert ist, so dass bei der Bewegung des Abstreifers in Höhenrichtung das Stutzelement in Höhenrichtung mit bewegt wird.

Der Abstreifer umfasst typischer Weise ein Abstreifelement zum Abstreifen der auf der Fanglanze angeordneten Rohrabschnitte sowie ein Stützelement in Form einer (oder mehrerer) Stützrollen, auf dem die Fanglanze aufliegen kann. Beim Bewegen der Fanglanze relativ zum Abstreifer rollt die Fanglanze dann mit nur geringer Reibung auf der Stützrolle ab, so dass weder der Abstreifer noch die Fanglanze beschädigt werden.

Um die auf die Fanglanze beim Stützen durch die Stützrolle einwirkende Kraft zu begrenzen, können der Abstreifer und/oder die Stützrolle in Höhenrichtung (Z-Richtung) gefedert gelagert sein. Der Abstreifer bzw. die Stützrolle sind in diesem Fall typischer Weise gegen eine entgegen der Schwerkraftrichtung wirkende Federkraft versch iebbar.

In einer Ausführungsform weist der Abstreifer ein Abstreiferetement auf, das an dem Abstreifer in Rohrlängsrichtung bzw. in Vorschubrichtung des Rohres vorschiebbar gelagert ist, und zwar typsicher Weise gegen die Wirkung einer Federkraft. Da es beim Abstreifen von Rohrteilen ggf. zu Verktemmungen zwischen einem Rohrteil und dem Abstreifer kommen kann, ist es günstig, wenn das typischer Weise plattenförmige Abstreiferelement bei einer zu großen Belastung als Überlastschutz eine Ausweichbewegung in Vorschubrichtung des Rohres (in positiver X-Richtung) ausführen kann. Die Kraft, bei der die Ausweichbewegung des Abstreiferelements ausgelöst wird, kann beispielsweise durch einen mechanischen Kraftbegrenzer stufenlos eingestellt werden. Das Auslösen der Ausgleichsbewegung kann beispielsweise mittels eines Näherungsschalters detektiert werden, um den weiteren Verschub des Rohres in -Rohrlängsrichtung zu stoppen.

Besonders bevorzugt weist der Abstreifer eine Abstreiferhalterung auf, die an einem in Rohrlängsrichtung (X-Richtung) verfahrbaren Abstreiferschlitten: höhenbeweglich angeordnet ist. Bei einer solchen Anordnung ist der Abstreifer flexibel positionierbar, die Position des Abstreifers entlang der Fanglanze also flexibel an die verschiedenen Größen der zu schneidenden Rohre bzw. an die Zahl und Größte der Rohrabschnitte anpassbar.

Gemäß der Erfindung ist die Ablagefläche an einem in Rohrlängsrichtung (X-Richtung) verfahrbaren Ablageschlitten gebildet. Die Ablagefläche des Ablageschlittens kann vorzugsweise nicht nur in Rohrlängsrichtung sondern auch in mindestens, einer weiteren Richtung (gesteuert) verfahren werden. Die Bewegung in der weiteren Richtung erfolgt dabei entweder durch Verfahren des Ablageschlittens als Ganzes oder dadurch, dass die Ablagefläche relativ zum tragenden Ablageschlitten, verfahren wird.

Die Ablagefläche wird, gemäß der Enfindung, während der Bearbeitung eines Rohres unterhalb des abzulegenden bzw. zu stützenden Rohres positioniert und in Z-Richtung an das Rohr angestellt, so dass ein abgeschnittenes Rohrteil nicht auf die Fanglanze fällt, sondern von unten durch die Ablagefläche gestützt wird. Nach dem Ende der Bearbeitung kann die Fanglanze aus dem Rohrteil herausgezogen werden, ohne dass sie das Rohrteil berührt und die Rohröberfläche beschädigt. Das abgeschnittene Rohrteil kann direkt von der Ablagefläche entnommen oder mit dem Ablageschlitten an eine andere Position in Rohrlängsrichtung verfahren und dort entladen werden.

Falls die Ablagefläche zusätzlich in mindestens einer anderen Richtung als der Rohrlängsrichtung verfahrbar ist, ist es außerdem möglich, den Abstreiferschlitten oder den bzw. die Fanglanzenschlitten direkt an der Bearbeitungsstelle zu positionieren, beispielsweise wenn dünne Rohre bearbeitet und auf einer dünnen, kurzen Fanglanze aufgefangen werden sollen. In einer Ausführungsform weist der Ablageschlitten dazu einen Ausleger zum Verfahren derAblagefläche des Ablageschlittens quer zur Rohrlängsrichtung bzw. zur Maschinenachse auf. Die Ablagefläche kann in diesem Fall von der Maschinenlängsachse weg verfahren werden, wenn der Abstreiferschlitten öder der bzw. die Fanglanzenschlitten, welche die Fanglanze tragen, neben der Bearbeitungsstelle positioniert werden sollen, sodass Kollisionen auf besonders einfache Weise verhindert werden können.

Bei einer weiteren Ausführungsform ist die Ablagefläche an dem Ablageschlitten höhenverstellbar gelagert. In diesem Fall können der Abstreiferschlitten oder der bzw. die Fanglanzenschlitten unter der Ablagefläche hindurch bewegt werden, oder umgekehrt. Auch kann die Höhenverstellung der Ablagefläche, welche z.B. durch die Anbringung der Ablagefläche an einem gesteuert in der Höhe verstellbaren Schlitten realisiert werden kann, dazu verwendet werden, um die Ablagefläche an den Hüllkreis des Rohrs anzustellen, welches von der Ablagefläche unterstützt werden soll.

Die Ablagefläche kann hierbei insbesondere prismatisch ausgebildet sein, d.h. von einer den Scheitel der Ablagefläche bildenden, sich in Rohrlängsrichtung erstreckenden Kante ausgehend quer zur Rohrlängsrichtung zu beiden Seiten hin ansteigen, sodass ein seitliches Wegrollen oder Wegrutschen von aufliegenden Rohrteilen verhindert wird.

In einer weiteren Ausführungsform ist die Ablagefläche des Ablageschlittens zwischen einer ersten, horizontalen Stellung zur Ablage von vom Rohr zu trennenden Rohrabschnitten und einer zweiten, geneigten Stellung zum Ausschleusen von vom Rohr getrennten Rohrabschnitten verschwenkbar. Zur Verschwenkung zwischen den beiden Stellungen kann eine Verschwenkeinrichtung z.B. in Form eines Hydraulik- oder Pneumatik-Zylinders dienen, dessen Kolben au einem freien Ende der Ablagefläche angreift. Durch die Schwenkbewegung der Ablagefläche können aufliegenden Rohrteile besonders einfach entladen werden.

In einer besonders bevorzugten Ausführungsform weist die Entladevorrichtung sowohl einen Abstreifer mit einem Stützelement als auch einen Ablageschlitten mit einer Ablagefläche auf, so dass sowohl die Fanglanze als auch das Rohr bzw. die Rohrabschnitte während bzw. nach der Bearbeitung gestützt werden können. Auf diese Weise wird eine besonders gute Stabilität und Präzision der Bearbeitung erreicht.

die Fanglanze kann auf zwei Fanglanzenhalterungen angeordnet werden, die unabhängig voneinander höhenverstellbar, d. h. in die zur Rohrlängsrichtung senkrechte Z-Richtung bewegbar sind. Auf diese Weise kann die Fanglanze nicht nur in der Höhe verändert werde, beispielsweise um sie an die obere Rohrinnenseite anzustellen, sondern sie kann auch in einem Winkel zur X-Achse schräg nach oben eingestellt werden. Dies ermöglicht vor allem beim Einsatz einer langen; dünnen Lanze eine kratzerfreie Bearbeitung des Rohrs, da eine Durchbiegung der Lanze aufgrund ihres Eigengewichts, die beim Einführen der Lanze in das zu bearbeitende Rohr zu Kollisionen oder zum Schleifen der Lanze auf der Rohrinnenseite führen kann, kompensierbar ist. Die Fanglanzenhalterungen sind typischer Weise in Rohrlängsrichtung (X-Richtung) verfahrbar gelagert.

Vorzugsweise sind die Fanglanzenhalterungen auf zwei unabhängig voneinander in Rohrlängsrichtung verfahrbaren Fanglanzenschlitten angebracht. Auf diese Weise kann der Stützabstand der Fanglanzenhalterungen gezielt variiert und in Abhängigkeit von der Länge und dem Gewicht der Lanze sowie vom Durchmesser und Gewicht des zu bearbeitenden Rohrs eingestellt werden: Bei langen Lanzen und schweren Rohrteilen kann der Stützabstand vergrößert werden, um eine Durchbiegung der Lanze und die Belastung der Halterungen zu verringern.

Bei einer Ausführungsform ist die Fanglanze an mindestens einer Fanglanzenhalterung in Rohrlängsrichtung verschiebbar gelagert, um eine Ausweichbewegung ausführen zu können, falls die auf die Fanglanze (in positiver oder negativer X-Richtung) wirkenden Kräfte zu groß werden. Die Verschiebung kann wie beim Abstreifelement gegen die Wirkung einer Federkraft erfolgen, wobei die Belastung, bei der die Ausweichbewegung ausgelöst wird, ebenfalls über einen Kraftbegrenzer eingestellt werden kann. Bei der Fangtanze ist eine Ausgleichs-bewegung sowohl in Vorschubrichtung des Rohres (in positiver X-Richtung) als auch entgegen der Vorschubrichtung (in negativer X-Richtung) günstig, da Verklemmungen sowohl beim Einfahren als auch bei Zurückziehen der Lanze aus dem Rohr auftreten können. Das Auftreten der Ausgleichsbewegung kann mittels eines Näherungsschalters detektiert werden, um eine weitere Bewegung der Lanze in Rohrlängsrichtung zu stoppen.

In einer Weiterbildung der Erfindung weist die Entladevorrichtung eine geneigte Entladefläche auf, welche sich quer zur Rohrlängsrichtung an die Anlagefläche anschließt. Das obere Ende der geneigten Entladefläche ist hierbei auf einer Höhe angeordnet, welche mit der Höhe des unteren Endes der Ablagefläche in der geneigten Stellung übereinstimmt, um Rohre bzw. Rohrteile in kontrollierter Weise in Sammelbehälter oder Transporteinrichtungen zu übergeben. Durch die (stationäre) Entladefläche, die sich über den gesamten Verfahrweg des Ablageschlittens bzw. der Fanglanzenschlitten in Rohrlängsrichtung erstreckt, wird verhindert, dass die Ablagefläche beim Verfahren in Rohrlängsrichtung mit schlecht positionierten Sammelbehältern kollidiert und ggf. dort verhakt.

Der bzw. die Fanglanzenschlitten, der Abstreiferschlitten und der Ablageschlitten können an Führungsschienen eines sich in Rohrlängsrichtung erstreckenden (Längs-)Trägers angebracht sein. Die Führungsschienen ermöglichen eine besonders einfache und damit kostengünstige Führung. Mit Hilfe von steuerbaren Antrieben können die Schlitten entlang der Führungsschienen unabhängig voneinander gesteuert bewegt werden und in einer gewünschten Position entlang des Trägers zugestellt werden. Es versteht sich, dass solche Führungsschienen auch direkt auf dem Boden der Maschinenhalle angebracht werden können, so dass die Schlitten direkt auf dem Boden verfahrbar sind. Eine Ausweichbewegung des Ablageschlittens kann in diesem Fall z.B. an einer Verzweigung einer der Führungsschienen realisiert werden, an welcher der Ablägeschlitten entlang eines abzweigenden Führungsschienenabschnitts, der in einer von der Rohrlängsrichtung abweichenden Richtung verläuft, bewegt werden kann.

Ein weiterer Aspekt der Erfindung betrifft ein Verfahren zum schneidenden Bearbeiten eines Rohres mit einer Laser-Bearbeitungsvorrichtung, der eine Entladevorrichtung wie oben beschrieben zugeordnet ist, umfassend die Schnitte: Einführen der Fanglanze in das innere eines zu schneidenden Rohrs, bis eine Aüffangöffnung der Fanglanze an einer Bearbeitungsstelle eines Laserstrahls positioniert ist, Bewegen des Stützelements - z.B. durch Bewegen des Abstreifers - und/oder der Ablagefläche in Höhenrichtung (Z-Richtung), bis die Fanglanze vom Stützelement und/oder der mindestens eine zu trennende Rohrabschnitt von der Ablagefläche des Ablageschlittens gestützt wird, Trennen des mindestens einen Rohrabschnitts vom Rohr mit Hilfe des Laserstrahls, sowie Zurückziehen der Fanglanze aus dem Rohrabschnitts.

Bei dem erfindungsgemäßen Verfahren wird die Fänglanze während der Bearbeitung des Rohrs und während des Abstreifens der geschnittenen Röhrteile vom Stützelement des Abstreifers gestützt, so dass sie sich weniger stark oder gar nicht durchbiegen kann und Vibrationen vermindert werden. Alternativ oder ergänzend wird das abzutrennende bzw. abgetrennte Rohrteil während der Bearbeitung bzw. beim Ein- oder Ausführen der Fanglanze von der Ablagefläche des Ablageschlittens gestützt. Auf diese Weise kann ein Kontakt zwischen der Fanglanze und der Rohrinnenfläche vollstandig vermieden werden, da die Lanze nicht zum Auffangen der geschnittenen Teile, sondern nur zum Abführen von Metallspritzern dient. Die Lanze wird in der Rohrmitte ein- bzw. ausgeführt und die geschnittenen Rohrteile bleiben auf der Ablagefläche liegen. Kratzer auf der Rohrinnenseite können daher vermieden werden. Ein Abstreifer wird in diesem Fall nicht unbedingt benötigt.

Vorzugsweise kann die Fanglanze vor oder nach dem Trennen des mindestens einen Rohrabschnitts in der Höhe (in Z-Richtung) verfahren werden, um den Abstand zur Schnittkante während des Schneidprozesses zu minimieren.

Zusätzlich oder alternativ kann die Fanglanze beim Einführen in das zu schneidende Rohr und/oder beim Zurückziehen aus dem bzw. den Rohrabschnitten in Z-Richtung in einem Winkel zur Rohrlängsachse (X-Achse) ausgerichtet werden. Die Durchbiegung einer langen, dünnen Lanze wird so kompensiert und Kollisionen zwischen der Lanze und dem Rohrende sowie das Schleifen der Lanze auf des Rohrinnenseite können verhindert werden. Das Ausrichten der Fanglanze unter einem Winkel zur Rohnängsachse kann hierbei erfolgen, indem die Fanglanzenhalterungen, an denen die Fanglanze gelagert ist, an unterschiedlichen Positionen in Höhenrichtung zugestellt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen, Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer konventionellen Bearbeitungsanlage zum Laserschneiden von Rohren,
- Fig. 2: eine schematische Darstellung einer Entladevorrichtung mit einem Ablageschlitten, einem Abstreiferschlitten sowie einer auf zwei Fanglanzenschlitten befestigten Fanglanze,
- Fig. 3: eine schematische Detaildarstellung des Abstreiferschlittens sowie der auf zwei Fanglanzenschlitten befestigten Fanglanze gemäß Fig. 2,
- Fig. 4: eine schematische Detaildarstellung des Abstreiferschlittens gemäß Fig. 2,
- Fig. 5: eine Seitenansicht der Entladevorrichtung mit der Fanglanze in Ausgangs- bzw. Entladeposition,
- Fig. 6: eine Seitenansicht der Entladevorrichtung mit der Fanglanze in einer Einfuhrposition in das zu bearbeitende Rohr, und
- Fig. 7: eine Seitenansicht der Entladevorrichtung mit der Fanglanze in einer Arbeitsposition.

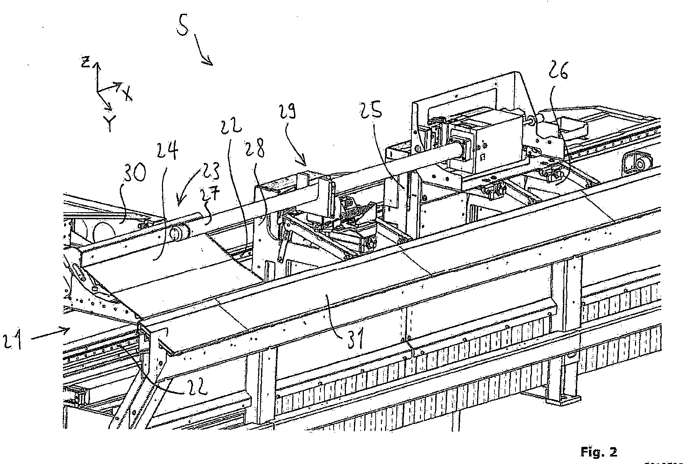

**Fig. 2** zeigt schematisch eine Entladevorrichtung 5, die an Stelle der in Fig. 1 gezeigten Entladevorrichtung 5 in der Laserschneidanlage. 1 von Fig. 1 Verwendung findet. Die Entladevorrichtung 5 weist einen (Längs-)Träger **21** auf, welcher sich in Rohrlängsrichtung (X-Richtung eines XYZ-Koordinatensystems) an das Maschinenbett 8 (vgl. Fig. 1) abschließt An dem Träger 21 sind in Rohrlängsrichtung X verlaufende. Führungsschienen **22** angebracht.

Die Entladevorrichtung 5 weist einen Ablageschtitten **23** mit einer Ablagefläche **24,** eine an zwei Fanglanzenschlitten **25, 26** einseitig gelagerte Fanglanze **27** sowie einen auf einem Abstreiferschlitten **28** angeordneten Abstreifer **29** auf.

An einer (in Fig. 2 nicht gezeigten) Führungsschiene, welche an der dem (in Fig. 2 nicht gezeigten) Rohr abgewandten Seite des Querträgers 21 angebracht ist, ist der Ablageschlitten 23 in Rohrlängsrichtung X geführt. Der Ablageschlitten 23 list mit einem (nicht gezeigten) Antrieb mittels der in Fig. 1 gezeigten Steuerungsvorrichtung 6 ansteuerbar und gesteuert verschiebbar: Die Ablagefläche 24 des Ablageschlittens 23 ist im vorliegenden Beispiel als prismatisch geformter Ablagetisch ausgebildet, der über einen Ausleger 30 in einer Richtung (Y-Richtung) quer zur Rohrlängsrichtung X über die Oberseite des Trägers 21 hinweg angestellt und zurückgezogen werden kann, so dass die Ablagefläche 24 nicht mehr in den Bereich der dem Rohr zugewandten Seite des Trägers 21 hinein ragt. Der Querausleger 30 ist an einem (nicht gezeigten) Z-Schlitten des Ablageschlittens 23 angebracht, welcher mit einem (nicht gezeigten) Antrieb verfahrbar ist, so dass die Ablagefläche 24 des Ablageschlittens 23 programmgesteuert (mittels der Steuerungsvorrichtung 6) in der Höhe (Z-Richtung) verfahren und so an den Durchmesser bzw: Hüllkreis der bearbeiteten bzw. zu bearbeitenden Rohre angestellt werden kann.

Die Ablagefläche 24 des in Fig. 2 gezeigten Ablageschlittens 23 ist zwischen einer ersten und einer zweiten Winkelstellung verschwenkbar. In der ersten, waagrechten Stellung (in Fig. 2 nicht gezeigt) werden Rohrteile ohne Abrollen oder Abrutschen auf der Ablagefläche 24 abgelegt. Hierbei wird beim Abtrennen von Rohrteilen vom unbearbeiteten Rohr der Ablageschlitten 23 unter dem jeweils abzulegenden Rohrteil positioniert. Die prismatische, zu den Seiten hin ansteigende Ablagefläche 24 verhindert das seitliche Wegrollen oder Wegrutschen von aufliegenden Rohren bzw. Rohrteile. In der waagerechten Stellung auf der Ablagefläche 24 abgelegte Rohrteile können nachfolgend durch Verfahren des Ablageschlittens 23 in Rohrlängsrichtung X an eine andere Position entlang des Trägers 21 transportiert und dort von Hand oder durch Neigen der Ablagefläche 24 entladen werden. Auf diese Weise ist eine Sortierung von Teilen in verschiedene Behälter entlang des Maschinenbetts bzw. des Trägers 21 möglich. Zum Ausschleusen von Rohrteilen an unterschiedlichen Positionen entlang der Längsachse X der Entladevorrichtung 5 wird der Ablageschlitten 23 programmgesteuert in Rohrlängsrichtung. X verfahren. Ein (nicht gezeigter) Hydraulikzylinder dient dazu, die Ablagefläche 24 aus der ersten, waagrechten Stellung in die zweite, geneigten Stellung (in Fig. 2 gezeigt) zu verschwenken und umgekehrt. Zu diesem Zweck ist ein freies Ende der Ablagefläche 24 mit einer Kolbenstange des Hydraulikzylinders bewegungsgekoppelt.

Um ein prozesssicheres Entladen der Rohrteile und eine definierte Übergabe an Sammelbehälter oder Transporteinrichtungen zu gewährleisten, ist am Maschinenbett eine schräge Entladefläche **31** angebracht, welche sich in Rohrlängsrichtung X entlang des gesamten Trägers 21 erstreckt Ein oberes Ende der Entladefläche 31 schließt sich hierbei an ein unteres Ende der Ablagefläche 24 in ihrer geneigten Stellung an. Die Entladefläche 31 dient z.B. dazu zu verhindern, dass die bewegte Ablagefläche 24 mit schlecht positionierten Sammelbehältern verhakt. Die schräge Entladefläche 31 ist typischer Weise mit ihrem unteren Ende in ihrer Höhe (Z-Richtung) so angeordnet, dass die Rohrteile ohne zusätzliche Hebeeinrichtungen in Euro-Gitterboxen (Ausschleushöhe 900mm) ausgeschleust werden können.

Die Ablagefläche 24 des Ablageschlittens 23 kann mit Hilfe des Querauslegers 30 in eine zurückgezogene Position an der dem Rohr abgewandten Seite des Trägers 21 verbracht werden. Die Ablagefläche 24 kann somit in Y-Richtung von der Maschinenlängsachse weg verfahren werden, beispielsweise wenn der Abstreiferschlitten 28 direkt im Ansühluss an die Bearbeitungsposition (Vgl. Fig. 1) angeordnet werden soll.

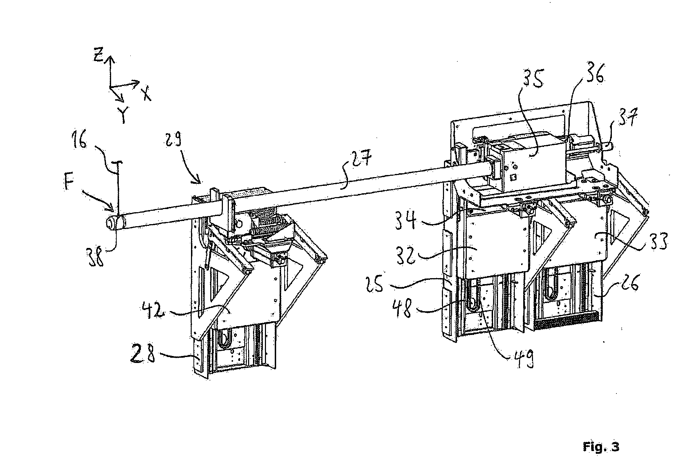

Wie in Fig. 3 zu erkennen ist, ist die Fanglanze 27 an zwei Fanglanzenhaltern **32, 33** gelagert, die an einem jeweils einem in Rohrlängsrichtung X verfahrbaren Fanglanzenschlitten 25, 26 angebracht sind. Die Fanglanze 27 ragt in Rohrlängsrichtung X auf die Dreh- und Vorschubeinrichtung 7 (vgl. Fig. 1) vor. Die Fanglanzenschlitten 25, 26 sind jeweils an eine Antriebseinheit eines motorischen Fanglanzenantriebes angekuppelt. Die Antriebseinheit weist einen elektrischen Antriebsmotor auf. Von diesem wird ein in den Abbildungen nicht näher beschriebenes Antriebszahnrad angetrieben, das seinerseits in eine Antriebszahnstange eingreift, weiche an dem Quer-Träger 21 angebracht ist.

Mittels der motorischen Antriebe sind die Fanglanzerischlitten 25, 26 gekoppelt und gemeinschaftlich mit der Fanglanze 27 in Rohrlängsrichtung X verfahrbar. Bei ihrer Verfahrbewegung werden die Fanglanzenschlitten 25, 26 durch eine Längsführung geführt, Dabei handelt es sich um eine herkömmliche Linearführung, die eine an dem Träger 21 montierte Führungsschiene umfasst. Mit der Führungsschiene wirkt in üblicher Weise eine an den Fanglanzenschlitten 25, 26 vorgesehene fanglanzenseitige Längsführungseinrichtung herkömmlicher Bauart zusammen.

Wie in Fig. 3 angedeutet ist, sind die Fanglanzenhalter 32, 33 unabhängig voneinander mittels jeweils eines elektrischen Antriebsmotors, der auf der Rückseite der Fanglanzenschlitten 25, 26 angeordnet ist (in Fig. 3 nicht zu erkennen), über Ritzel **48** und Zahnriemen **49** in der Höhe verstellbar. Durch das Zustellen der Fanglanzenhalter 32, 33 in unterschiedlichen Z-Positionen kann die Fanglanze 27 in einem Winkel zur Rohrlängsachse X ausgerichtet werden, wie weiter unten näher beschrieben wird.

Wenn die Fanglanze 27 ausschließlich in waagerechter Ausrichtung eingesetzt werden und nicht in ihrem Winkel zur X-Achse variiert werden soll, können die beiden Fanglanzenhalterungen 32, 33 mechanisch (starr) miteinander gekoppelt. werden, beispielsweise mit Hilfe einer Blechbrücke **34.** Auf diese Weise können die durch die Fanglanze 27 und die auf dieser aufliegenden Rohrteile erzeugten Momente als Verbund aufgenommen werden, wodurch die Stabilität und steifigkeit der Anordnung verbessert wird. Die Fanglanze 27 ist an einer auf der Blechbrücke 34 angeordneten Lanzenkupplung 35 gelagert, die das Austauschen der Fanglanze 27 ermöglicht. Die Lanzenkupplung 35 ist an einer Führungsschiene **36** in Rohrlängsrichtung X verschiebbar gelagert, um eine Ausweichbewegung der Fanglanze 27 zu ermöglichen, falls es beim Einfahren der Fanglanze 27 in das Rohr 2 oder beim Zurückziehen der Fanglanze 27 aus dem Rohr 2 zu Kollisionen kommt. Die Kraft in X-Richtung, bei der die Ausgleichsbewegung ausgelöst wird, kann über einen mechanischen Kraftbegrenzer **37** stufenlos eingestellt werden. Die Auslösekraft kann hierbei in Abhängigkeit vom Gewicht und den Abmessungen des zu bearbeitenden Rohrs 2 bzw. in Abhängigkeit von der Größe und Länge der Fanglanze 27 angepasst werden.

Die Fanglanze 27 ist an ihrem freien Ende mit einer in Fig. 3 erkennbaren Auffangöffnung **38** versehen. In Aufbau und Funktionsweise entspricht die Fanglanze 27 beispielsweise der in EP 1454 700 A1 beschriebenen Kühl- und/oder Spüllanze. Sie kann alternativ als "Opferlanze" ohne Spülfunktion ausgeführt sein. In diesem Fall ist die Fanglanze an ihrem Ende mit einer löffelförmigen Auffangöffnung 38 ohne Spülfluidzugang ausgeführt, um Schweißspritzer aufzufangen. Bei der schneidenden Rohrbearbeitung ist die Auffangöffnung 38 im Innern des zu bearbeitenden Rohres 2 unterhalb der Bearbeitungsstelle F des Laserschneidstrahls 16 angeordnet (vgl. Fig. 1).

Im Inneren des Rohrs 2 anfallende Metallspritzer gelangen bei einer Spüllanze durch die Auffangöffnung 38 in das Innere der Lanze 27, von wo aus sie mit Hilfe eines Spülmediums abgeführt werden. Das Spülmedium wird über Schläuche in die Fanglanze 27 aufgegeben und - mit Verunreinigungen befrachtet - aus der Fanglanze 27 abgeführt. Die Zu- und Ableitungen für das Spülmedium sind im Innern einer an den Fanglanzenschlitten. 25, 26 befestigten Schleppkette geschützt untergebracht.

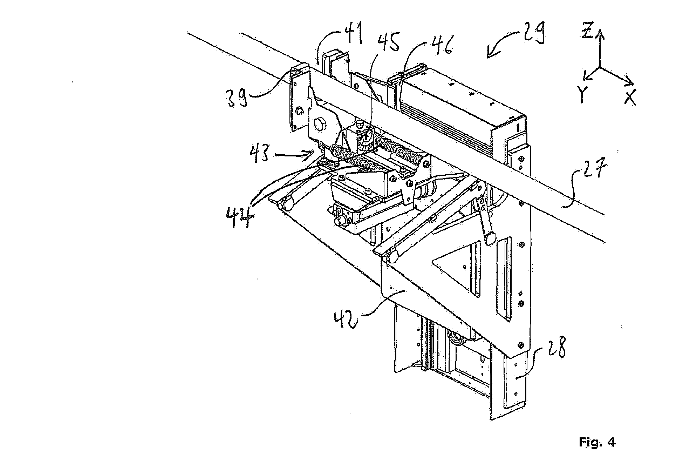

In **Fig. 4** ist der Abstreifer 29 im Detail gezeigt. Der Abstreifer 29 umfasst ein Abstreifelement **39** und ein Stützelement in Form einer Stützrolle **40.** Das Abstreifelement 39 ist plattenartig ausgebildet und weist eine U-förmige Durchtrittsöffnung **41** auf, an der es von der Fanglanze 27 durchsetzt wird. Die Stützrolle 40 ist an einer Abstreiferhalterung **42** drehbar gelagert und dient zum Stützen der Fanglanze 27 während der Laserbearbeitung und beim Entladen von Rohrabschnitten. Um die auf die Fanglanze 27 durch die Stützrolle 40 einwirkende Kraft zu begrenzen, ist die Abstreiferhalterung 42 in Z-Richtung gefedert gelagert und in der Höhe (in Z-Richtung) relativ zum Abstreiferschlitten 28 verschiebbar.

Der Abstreiferschlitten 28 mit dem Abstreifer 29 ist an eine Antriebseinheit eines (nicht gezeigten) motorischen Abstreiferantriebes angekuppelt. Die Antriebseinheit des motorischen Abstreiferantriebes umfasst einen elektrischen Antriebsmotor. Dieser treibt ein Antriebszahnrad an, das seinerseits mit einer Gegenverzahnung der Antriebszahnstange kämmt. Dementsprechend bildet die Antriebszahnstange eine dem motorischen Fanglanzenantrieb und dem motorischen Abstreiferantrieb gemeinsame tragstrukturseitige Antriebseinrichtung. Mittels des motorischen Abstreiferantriebes ist der Abstreiferschlitten 28 mit dem Abstreifers 29 relativ zum Laserschneidkopf 17 in Rohrlängsrichtung X verfahrbar. Zur Führung des Abstreiferschlittens 28 bzw. des Abstreifers 29 bei dessen Bewegung in Rohrlängsrichtung X dient eine nicht näher bezeichnete Abstreifer-Längsführung. Auch bei der Abstreifer-Längsführung handelt es sich um eine herkömmliche Linearführung.

Da es beim Abstreifen von Rohrabschnitten zu Verklemmungen zwischen der Fanglanze 27, einem jeweiligen Rohrabschnitt und den Abstreifer 29 bzw. dem Abstreifelement 39 kommen kann, ist es erforderlich, dass das Abstreifelement 39 bei einer zu hohen Belastung in Bewegungsrichtung des Rohres 2 (d.h. in positiver X-Richtung) ausweichen kann. Zu diesem Zweck ist eine Überlast-Schutzeinrichtung **43** an der Abstreiferhalterung 42 vorgesehen, die zwei Spannfedern **44** und einen (weiteren) mechanischen Kraftbegrenzer **45** umfasst. Die Ausweichlänge des Abstreiferelements 38 in Rohrlängsrichtung X ist durch den Federweg der beiden Spannfedern 42 vorgegeben und beträgt beispielsweise 120 mm. Die Kraft, ab der eine Ausweichbewegung auslöst wird, ist manuell über den mechanischen Kraftbegrenzer 45 im Bereich von ca. 100 N bis 1500 N stufenlos in Abhängigkeit vom Gewicht der Rohrteile und der Lanze 27 einstellbar. Die eingestellte Kraft wird durch einen Zeiger am Kraftbegrenzer 45 angezeigt. Ein Auslösen der Ausweichbewegung wird durch einen am Abstreiferschlitten 28 angebrachten Näherungsschalter **46** detektiert. Die zugehörige Schaltfahne ist so ausgeführt, dass sie den Näherungsschalter 46 auch bei Verfahren der Abstreiferhalterung 42 in der Höhe weiter abdeckt. Bei Auslösen des Näherungsschalters 46 wird die Verfahrbewegung der Fanglanzenschlitten 25, 26 gestoppt.

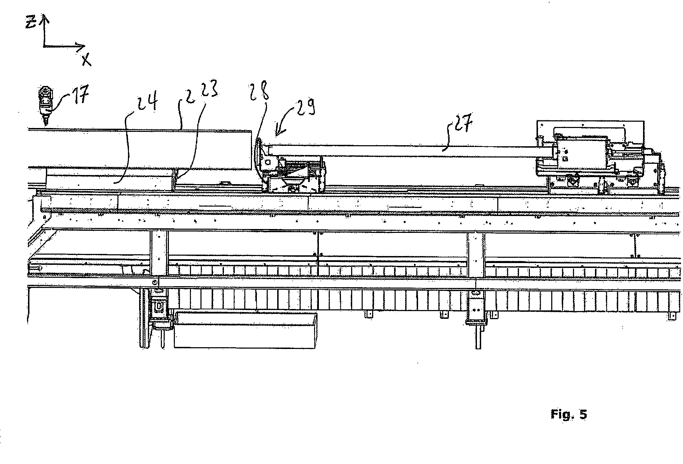

Der Ablauf einer Rohrbearbeitung ist anhand der **Figuren 5****,** **6** und **7** ersichtlich.

In **Fig. 5** ist die Entladeseite der Rohrbearbeitungsmaschine 1 in einer Seitenansicht gezeigt. In diesem Beispielsfall ist ein Rohr 2 mit verhältnismäßig großem Durchmesser zu bearbeiten. Zur besseren Unterscheidbarkeit ist die Fanglanze 27 mit deutlich geringerem Durchmesser dargestellt.. Die in das Innere des Rohres 2 eintauchende Fanglanze 27 kann aber auch einen an den Rohrdurchmesser angepassten, größeren Durchmesser aufweisen. Ein großer Fanglanzendurchmesser wiederum erlaubt eine große Fanglanzenlänge, da für das Spülmedium im Inneren der Fanglanze 27 Strömungsquerschnitte bereitgestellt werden können, die einen funktionssicheren Zu- und Abtransport von Spülmedium auch über verhältnismäßig große Weglängen gestatten. Außerdem bietet ein großer Durchmesser der Fanglanze 27 die Möglichkeit, die Fanglanze mit der bei großer Länge zu fordernden erhöhten Eigensteifigkeit auszuführen.

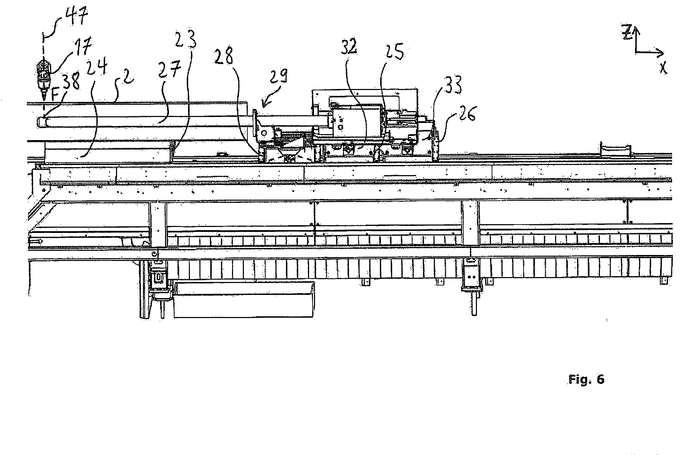

Vor Beginn der schneidenden Rohrbearbeitung werden zunächst die Fanglanze 27 und der Abstreifer 29 bei abgeschaltetem Laserschneidstrahl in Rohrlängsrichtung X positioniert, wie es in **Fig. 6** gezeigt ist. Zu diesem Zweck werden die Fanglanzenschlitten 25, 26 mittels der motorischen Antriebe numerisch gesteuert in Rohrlängsrichtung X derart angeordnet, dass die Auffangöffnung der Fanglanze 27 von der Bearbeitungsachse **47** des Laserschneidkopfes 17 durchsetzt wird. Dabei läuft die Fanglanze 27 an dem freien Ende des zu bearbeitenden Rohres 2 in das Rohrinnere ein. Das Rohrende steht anschließend mit dem gewünschten Maß über die Bearbeitungsachse 47 des Laserschneidkopfes 17 zu der Entladeseite der Laserschneidmaschine 1 hin vor.

Wenn bei großer Länge der Fanglanze 27 eine Durchbiegung aufgrund ihres Eigengewichts auftritt, kann diese durch ein Schrägstellen der Lanze 27 kompensiert werden. Dazu wird die Fanglanzenhalterung 32 des Fanglanzenschlittens 25, der näher beim Laserschneidkopf 17 angeordnet ist, relativ zu der schneidkopffernen Fanglanzenhalterung 33 nach oben verfahren. So kann die Fanglanze 27 in das Innere des Rohrs 2 mit nur geringfügig größerem Innendurchmesser eintauchen, ohne die Innenoberfläche des Rohrs 2 zu beschädigen. Es versteht sich, dass die Schrägstellung der Fanglanze 27 entlang ihres Verfahrwegs in Rohrlängsrichtung 27 ggf. verändert werden kann.

Vor dem Bearbeiten wird der Abstreiferschlitten 28 mittels des gleichfalls numerisch gesteuerten motorischen Abstreiferantriebes in Rohrlängsrichtung X in eine Position verfahren, in weicher er von der Bearbeitungsachse 47 des Laserschneidkopfs 17 in Rohrlängsrichtung X einen Abstand aufweist, der auf die Gesamtlänge des bzw. der nach der Rohrbearbeitung zu entladenden Fertigteile abgestimmt ist. Auf die Gesamtlänge der zu entladenden Fertigteile gleichfalls abgestimmt ist damit der schneidkopfseitige Überstand der Fanglanze 27 gegenüber dem Abstreifer 29.

Der Ablageschlitten 23 kann unter dem Rohr 2 angeordnet und in Z-Richtung an das Rohr 2 angestellt werden. So wird das Rohr 2 während und/oder nach der Bearbeitung durch die Ablagefläche 24 gestützt. Dies ist vorteilhaft, wenn schwere Rohre geschnitten werden sollen oder wenn kratzerfrei entladen werden soll. In der in Fig. 6 gezeigten Entladestellung ist der Ablageschlitten 23 zwischen dem Schneidkopf 17 und dem Abstreiferschlitten 28 unter dem Rohr 2 angeordnet. Wenn dünnwandige Rohre bearbeitet oder kurze Rohrteile geschnitten werden sollen, ist eine Unterstützung durch die Ablagefläche 24 nicht nötig oder sogar hinderlich. Dann kann die Ablagefläche 24 mit Hilfe des Querauslegers 30 (vgl. Fig. 2) in eine zurückgezogene Position an der dem Rohr 2 abgewandten Seite des Trägers 21 verbracht werden, so dass der Abstreiferschlitten 28 direkt im Anschluss an die Bearbeitungsposition F positioniert werden kann.

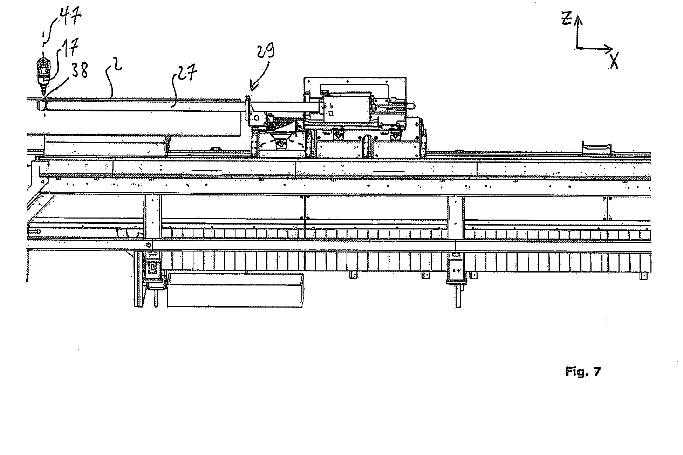

Wie Fig. 7 zeigt, wird die Fanglanze 27 nach dem Eintauchen in das Rohr 2 durch eine Bewegung der Fanglanzenhalterungen 32, 33 in Z-Richtung angehoben und knapp (beispielsweise ca. 3 mm) unter der oberen Rohrinnenseite positioniert. Der Abstreifer 29 wird ebenfalls in Z-Richtung angehoben, so dass die Stützrolle 40 die Fanglanze 27 stützt.

Nun wird bei in Rohrlängsrichtung X ortsfester Dreh- und Vorschubeinrichtung 7 und bei eingeschaltetem Laserschneidstrahl16 das Spannfutter 12 der Dreh- und Vorschubeinrichtung 7 mit dem daran festgelegten Rohr um 360° in Rohrumfangsrichtung gedreht. Bei dieser Drehbewegung wird an dem Rohr 2 ein in Rohrumfangsrichtung durchgehender Trennschnitt erstellt. Eine Verunreinigung der Rohrinnenwand durch die bei dem Schneidvorgang gebildeten Metallspritzer wird mittels der Fanglanze 27 verhindert. Ein durch den Trennschnitt von dem Rohr 2 abgetrennter Rohrabschnitt wird entweder unter Schwerkraftwirkung selbsttätig auf der Fanglanze 27 abgelegt oder von unten durch die Ablagefläche 24 des Ablageschlittens 23 gestützt und ggf. durch gesteuertes Verfahren der Ablagefläche 24 nach unten auf der Fanglanze 27 abgelegt.

Anschließend kann das Rohr 2 bei abgeschaltetem Laserschneidstrahl 18 durch Verfahren der Dreh- und Vorschubeinrichtung 7 in Richtung auf den Laserschneidkopf 17 nachgesetzt werden. Dabei wird der auf der Fanglanze 27 aufgefädelte Rohrabschnitt durch das vorauseilende Ende des Rohres 2 in Richtung auf den Abstreifer 29 verschoben. Nach Beendigung der Nachsetzbewegung wird bei in Rohrlängsrichtung X stationärer Dreh- und Vorschubeinrichtung 7 und bei eingeschaltetem Laserschneidstrahl 16 durch Drehen des Rohres 2 um 360° ein weiterer Trennschnitt erstellt. Auch ein dabei abgetrennter Rohrabschnitt kommt selbsttätig oder durch die Ablagefläche 24 gestützt auf der Fanglanze 27 zu liegen. Der beschriebene Trennvorgang kann weitere Male wiederholt werden, so dass weitere Rohrabschnitte abgetrennt und gleichfalls auf der Fanglanze 27 aufgefädelt werden, bis der schneidkopfseitige Überstand der Fanglanze 27 gegenüber dem Abstreifer 29 durch die Rohrabschnitte weitgehend belegt ist.

Zum Entladen der Rohrabschnitte wird die Anlagefläche 24 des Ablagetisches 23 in die geneigte Entladestellung verschwenkt. Dann verfährt die Fanglanze 27 numerisch gesteuert aus ihrer Arbeitsstellung gemäß Fig. 7 in die Entladestellung gemäß Fig. 5. Dabei führt die Fanglanze 27 eine Relativbewegung zu dem Abstreifer 29 aus. Infolge dieser Relativbewegung werden die Rohrabschnitten, deren Durchmesser die Weite der Durchtrittsöffnung 41 an dem Abstreifer 29 übersteigt, mittels des Abstreifers 29 von der Fanglanze 27 abgestreift. Die Rohrabschnitte fallen unter Schwerkraftwirkung auf die (schräggestellte) Ablagefläche 24 des Ablagetisches 23 und rollen oder rutschen dann auf die geneigte Entladfläche 31, von wo aus sie in nicht im Einzelnen dargestellten Fertigteilbehältern abgelegt und schließlich aus dem Nahtbereich der Laserschneidanlage 1 abgeführt werden.

Alternativ kann die Ablagefläche 24 des Ablagetisches 23 während des Ausfahrens der Fanglanze 27 in waagerechter Position eingestellt sein. In diesem Fall fallen die Rohrabschnitte auf die Ablagefläche 24 und bleiben dort liegen. Durch Verfahren des Ablageschlittens 23 entlang des Trägers 21 und anschließendem Neigen der Ablagefläche 24 können die Rohrteile an der gewünschten Position entladen werden.

Bei schweren Rohrteilen oder wenn ein Verkratzen der Rohrinnenseite beim Herausziehen der Fanglanze 27 vermieden werden soll, erfolgt das Entladen der geschnittenen Rohrteile mit Hilfe des Ablageschlittens 23. Das Rohr 2 wird in diesem Fall während des Trennschnitts von unten durch die - waagerecht gestellte-Ablagefläche 24 gestützt. Die geschnittenen Rohrteile bleiben auf der Ablagefläche 24 liegen und werden nicht auf der Fanglanze 27 abgelegt. Nach dem Ende der Bearbeitung wird die Fanglänze 27 in Z-Richtung bis zur Rohrmitte abgesenkt und aus den geschnittenen Rohrteilen gezogen, ohne die Rohrinnenflächen zu berühren. Die fertigen Rohrteile können dann mit Hilfe des Ablageschlittens 23 an beliebige Stellen entlang des Trägers 21 verbracht und durch Neigen der Ablagefläche 24 entladen werden.

## Patentansprüche

1. Entladevorrichtung (5) für eine Bearbeitungsvorrichtung (4) zur schneidenden Bearbeitung von Rohren (2), wobei die Entladevorrichtung eine in Rohrlängsrichtung (X) bewegbare und in das Innere eines zu bearbeitenden Rohrs (2) einführbare Fanglanze (27) aufweist,
**dadurch gekennzeichnet,**
**dass** die Entladevorrichtung (5) eine in Höhenrichtung (Z) bewegliche Ablagefläche (24) zur Ablage mindestens eines bei der schneidenden Bearbeitung vom Rohr (2) zu trennenden Rohrabschnitts umfasst, die an einem in Rohrlängsrichtung (X) verfahrbaren Ablageschlitten (23) gebildet ist und die während der Bearbeitung des Rohres (2) unterhalb des abzulegenden Rohrabschnitts positionierbar und in Höhenrichtung (Z) an das Rohr (2) anstellbar ist.

2. Entladevorrichtung nach Anspruch 1, **dadurch gekennzeichnet, dass** ein bevorzugt in Rohrlängsrichtung (X) bewegbarer Abstreifer (29) mindestens ein in Höhenrichtung (Z) bewegliches Stützelement (40) in Form einer Stützrolle zum Stützen der Fanglanze (27) aufweist, und dass der Abstreifer (29) oder das Stützelement (40) an dem Abstreifer (29) in Höhenrichtung (Z) bewegbar gelagert ist.

3. Entladevorrichtung nach Anspruch 2, **dadurch gekennzeichnet, dass** der Abstreifer (29) und/oder das Stützelement (40) in Höhenrichtung (Z) gefedert gelagert sind.

4. Entladevorrichtung nach einem der Ansprüche 2 oder 3, **dadurch gekennzeichnet, dass** der Abstreifer (29) ein Abstreifelement (39) aufweist, das an dem Abstreifer (29) in Rohrlängsrichtung (X) verschiebbar gelagert ist.

5. Entladevorrichtung nach einem der Ansprüche 2 bis 4, **dadurch gekennzeichnet, dass** der Abstreifer (29) eine Abstreiferhalterung (42) aufweist, die an einem in Rohrlängsrichtung (X) verfahrbaren Abstreiferschlitten (28) in Höhenrichtung (Z) bewegbar gelagert ist.

6. Entladevorrichtung nach einem der vorhergehenden Ansprüche, bei welcher der Ablageschlitten (23) quer zur Rohrlängsrichtung (X) verfahrbar ist oder einen Ausleger (30) zum Verfahren der Ablagefläche (24) des Ablageschlittens (23) quer zur Rohrlängsrichtung (X) aufweist.

7. Entladevorrichtung nach einem der vorhergehenden Ansprüche, bei welcher die Ablagefläche (24) an dem Ablageschlitten (23) höhenverstellbar gelagert ist.

8. Entladevorrichtung nach einem der vorhergehenden Ansprüche, bei welcher die Ablagefläche (24) des Ablageschlittens (23) prismatisch ist, derart, dass sie von einer den Scheitel der Ablagefläche (24) bildenden, sich in Rohrlängsrichtung (X) erstreckenden Kante ausgehend quer zur Rohrlängsrichtung (X) zu beiden Seiten hin ansteigt.

9. Entladevorrichtung nach einem der vorhergehenden Ansprüche, bei welcher die Ablagefläche (24) des Ablageschlittens (23) zwischen einer ersten Stellung zur Ablage von Rohrabschnitten und einer zweiten Stellung zum Ausschleusen von Rohrabschnitten verschwenkbar ist.

10. Entladevorrichtung nach einem der vorhergehenden Ansprüche, **dadurch gekennzeichnet, dass** die Fanglanze (27) an mindestens einer Fanglanzenhalterung (32, 33) in Rohrlängsrichtung (X) verschiebbar gelagert ist.

11. Entladevorrichtung nach einem der vorhergehenden Ansprüche, weiter umfassend: eine geneigte Entladefläche (31), welche sich in einer Richtung (Y) quer zur Rohrlängsrichtung (X) an die Ablagefläche (24) des Ablageschlittens (23) anschließt und sich in Rohrlängsrichtung (X) erstreckt.

12. Verfahren zum schneidenden Bearbeiten eines Rohrs (2) mit einer Laser-Bearbeitungsvorrichtung (4), der eine Entladevorrichtung (5) nach einem der Ansprüche 1 bis 11 zugeordnet ist, umfassend die Schritte:
Einführen der Fanglanze (27) in das Innere eines zu schneidenden Rohres (2), bis eine Auffangöffnung (38) der Fanglanze (27) an einer Bearbeitungsstelle (F) eines Laserstrahls (16) positioniert ist,
Bewegen des Stützelements (40) und/oder der Ablagefläche (24) in Höhenrichtung (Z), bis die Fanglanze (27) und/oder der mindestens eine zu trennende Rohrabschnitt gestützt wird,
Trennen des mindestens einen Rohrabschnitts von dem Rohr (2) mit Hilfe des Laserstrahls (16), sowie
Zurückziehen der Fanglanze (27) aus dem Rohrabschnitt.

13. Verfahren nach Anspruch 12, bei dem die Fanglanze (27) vor oder nach dem Trennen des mindestens einen Rohrabschnitts in Höhenrichtung (Z) verfahren wird.

14. Verfahren nach einem der Ansprüche 12 oder 13, bei dem beim Zurückziehen der Fanglanze (27) der mindestens eine Rohrabschnitt nicht auf der Fanglanze (27) aufliegt.

## Claims

1. An unloading device (5) for a processing device (4) for processing pipes (2) by cutting, having a catching lance (27) which is movable in the longitudinal direction (X) of a pipe and which is insertable into the interior of a pipe (2) to be processed,
**characterised in that** the unloading device (5) comprises a depositing surface (24) movable in a height direction (Z) for depositing at least one pipe portion to be severed from the pipe (2) during processing by cutting which is formed on a depositing slide (23) which is displaceable in a longitudinal direction (X) of the pipe and can be positioned below the pipe portion to be deposited during processing of the pipe (2) and can be presented to the pipe (2) in the height direction (Z).

2. An unloading device according to claim 1, **characterised in that** a stripper (29) which is preferably movable in the longitudinal direction (X) of the pipe includes at least one support element (40) which is movable in the height direction (Z) and is in the form of a support roller for supporting the catching lance (27), and the stripper (29) or the support element (40) on the stripper (29) is supported so as to be movable in the height direction (Z).

3. An unloading device according to claim 2, **characterised in that** the stripper (29) and/or the support element (40) is/are spring-mounted in the vertical direction (Z).

4. An unloading device according to either of claims 2 or 3, **characterised in that** the stripper (29) has a stripper element (39) which is supported on the stripper (29) so as to be displaceable in the longitudinal direction (X) of the pipe.

5. An unloading device according to any one of claims 2 to 4, **characterised in that** the stripper (29) has a stripper mount (42) which is supported on a stripper slide (28), which is displaceable in the longitudinal direction (X) of the pipe, in such a manner as to be movable in the height direction (Z).

6. An unloading device according to any one of the preceding claims, in which the depositing slide (23) is displaceable transversely to the longitudinal direction (X) of the pipe or has an arm (30) for displacing the depositing surface (24) of the depositing slide (23) transversely to the longitudinal direction (X) of the pipe.

7. An unloading device according to any one of the preceding claims, in which the depositing surface (24) is supported on the depositing slide (23) so as to be vertically adjustable.

8. An unloading device according to any one of the preceding claims, in which the depositing surface (24) of the depositing slide (23) is prismatic in such a manner that it extends upwards to both sides transversely to the longitudinal direction (X) of the pipe from an edge extending in the longitudinal direction (X) of the pipe and forming the vertex of the depositing surface (24).

9. An unloading device according to any one of the preceding claims, in which the depositing surface (24) of the depositing slide (23) is pivotable between a first position for depositing pipe portions and a second position for discharging pipe portions.

10. An unloading device according to any one of the preceding claims, **characterised in that** the catching lance (27) is supported on at least one catching lance mount (32, 33) so as to be displaceable in the longitudinal direction (X) of the pipe.

11. An unloading device according to any one of the preceding claims, further comprising: an inclined unloading surface (31) which adjoins the depositing surface (24) of the depositing slide (23) in a direction (Y) transverse to the longitudinal direction (X) of the pipe and which extends in the longitudinal direction (X) of the pipe.

12. A method for processing a pipe (2) by cutting using a laser processing device (4) with which an unloading device (5) according to any one of claims 1 to 11 is associated, comprising the steps of:
inserting the catching lance (27) into the interior of a pipe (2) that is to be cut, until a collecting aperture (38) of the catching lance (27) is positioned at a processing site (F) of a laser beam (16),
moving the support element (40) and/or the depositing surface (24) in the height direction (Z) until the catching lance (27) and/or the at least one pipe portion to be severed is supported,
severing the at least one pipe portion from the pipe (2) by means of the laser beam (16), and
withdrawing the catching lance (27) from the pipe portion.

13. A method according to claim 12, in which the catching lance (27) is displaced in the height direction (Z) before or after severing of the at least one pipe portion.

14. A method according to either of claims 12 or 13, in which the at least one pipe portion does not rest on the catching lance (27) on withdrawal of the catching lance (27).

## Revendications

1. Dispositif de déchargement (5) pour un dispositif d'usinage (4) pour l'usinage par outil coupant de tubes (2), lequel dispositif de déchargement présente une lance réceptrice (27) mobile dans la direction longitudinale du tube (X) et pouvant être introduite à-l'intérieur d'un tube (2) à usiner,
**caractérisé en ce**
**que** le dispositif de déchargement (5) comprend une surface de dépose (24) mobile dans la direction de la hauteur (Z) pour la dépose d'au moins un tronçon de tube à séparer du tube (2) lors de l'usinage par outil coupant, qui est formée sur un chariot de dépose (23) déplaçable dans la direction longitudinale du tube (X) et qui, pendant l'usinage du tube (2), peut être positionnée sous le tronçon de tube à déposer et appliquée contre le tube (2) dans la direction de la hauteur (Z).

2. Dispositif de déchargement selon la revendication 1, **caractérisé en ce qu'**un racloir (29) de préférence mobile dans la direction longitudinale du tube (X) présente au moins un élément de support (40) mobile dans la direction de la hauteur (Z) sous la forme d'un galet de support pour soutenir la lance réceptrice (27), et que le racloir (29) ou l'élément de support (40) sur le racloir (29) est monté mobile dans la direction de la hauteur (Z).

3. Dispositif de déchargement selon la revendication 2, **caractérisé en ce que** le racloir (29) et/ou l'élément de support (40) sont montés de manière élastique dans la direction de la hauteur (Z).

4. Dispositif de déchargement selon l'une des revendications 2 ou 3, **caractérisé en ce que** le racloir (29) présente un élément racleur (39) qui est monté coulissant dans la direction longitudinale du tube (X) sur le racloir (29).

5. Dispositif de déchargement selon l'une des revendications 2 à 4, **caractérisé en ce que** le racloir (29) présente un support de racloir (42) qui est monté mobile dans la direction de la hauteur (Z) sur un chariot de racloir (28) déplaçable dans la direction longitudinale du tube (X).

6. Dispositif de déchargement selon l'une des revendications précédentes, dans lequel le chariot de dépose (23) est déplaçable transversalement à la direction longitudinale du tube (X) ou présente un bras (30) pour déplacer la surface de dépose (24) du chariot de dépose (23) transversalement à la direction longitudinale du tube (X).

7. Dispositif de déchargement selon l'une des revendications précédentes, dans lequel la surface de dépose (24) est montée réglable en hauteur sur le chariot de dépose (23).

8. Dispositif de déchargement selon l'une des revendications précédentes, dans lequel la surface de dépose (24) du chariot de dépose (23) est prismatique, de telle sorte qu'elle s'élève des deux côtés transversalement à la direction longitudinale du tube (X) à partir d'une arête formant le sommet de la surface de dépose (24) et s'étendant dans la direction longitudinale du tube (X).

9. Dispositif de déchargement selon l'une des revendications précédentes, dans lequel la surface de dépose (24) du chariot de dépose (23) peut pivoter entre une première position de dépose des tronçons de tube et une deuxième position d'éjection des tronçons de tube.

10. Dispositif de déchargement selon l'une des revendications précédentes, **caractérisé en ce que** la lance réceptrice (27) est montée coulissante dans la direction longitudinale du tube (X) sur au moins un support de lance réceptrice (32, 33).

11. Dispositif de déchargement selon l'une des revendications précédentes, comprenant en outre : une surface de déchargement inclinée (31) qui se raccorde à la surface de dépose (24) du chariot de dépose (23) dans une direction (Y) transversale à la direction longitudinale du tube (X) et s'étend dans la direction longitudinale du tube (X).

12. Procédé pour l'usinage par outil coupant d'un tube (2) avec un dispositif d'usinage au laser (4), auquel est associé un dispositif de déchargement (5) selon l'une des revendications 1 à 11, comprenant les étapes suivantes :
introduire la lance réceptrice (27) à l'intérieur d'un tube (2) à couper jusqu'à ce qu'une ouverture de collecte (38) de la lance réceptrice (27) soit positionnée à un point d'usinage (F) d'un faisceau laser (16),
déplacer l'élément de support (40) et/ou la surface de dépose (24) dans la direction de la hauteur (Z) jusqu'à ce que la lance réceptrice (27) et/ou ledit au moins un tronçon de tube à séparer soit soutenu(e),
séparer ledit au moins un tronçon de tube du tube (2) à l'aide du faisceau laser (16), ainsi que
retraiter la lance réceptrice (27) du tronçon de tube.

13. Procédé selon la revendication 12, selon lequel la lance réceptrice (27) est déplacée dans la direction de la hauteur (Z) avant ou après la séparation dudit au moins un tronçon de tube.

14. Procédé selon l'une des revendications 12 ou 13, selon lequel ledit au moins un tronçon de tube ne repose pas sur la lance réceptrice (27) lors du retrait de la lance réceptrice (27).
